# EUROPEAN PATENT APPLICATION

(11) **EP 2 882 257 A1**
(43) Date of publication of application: **10.06.2015**
(21) Application number: 13198005.4
(22) Date of filing: 18.12.2013
(51) Int. Cl.: H04W 88/10

(54) **Expandable routing system (LTE + DSL)**

(30) Priority: 22.08.2013 TW 102215747
(71) Applicant: Arcadyan Technology Corp., Hsinchu 300 (TW)
(72) Inventor: Ho, Ming-Hsi, 351 Toufen Township, Miaoli County (TW); Wang, Po-Kang, 30073 Hsinchu City (TW); Lin, Yen-Ju, 300 Hsinchu (TW)
(74) Representative: Viering, Jentschura & Partner Patent- und Rechtsanwälte

(57) **Abstract**

Disclosure herein is related to an expandable routing system, a wireless transceiver (11), and a cable routing apparatus (12). The system essentially includes two independent devices that are able to be interconnected. The cable routing apparatus (12) performs packet routing between a local area network and a wide area network. The wireless transceiver (11) may be assembled with the cable routing apparatus (12) via antenna contacts (110, 120) and a data connecting port (112, 122). An antenna unit (106) served for the wireless transceiver (11) to conduct wireless signals is particularly installed in the cable routing apparatus (12). This scheme allows the wireless transceiver (11) to perform signals transmittal while the transceiver (11) is connected with the cable routing apparatus (12) in addition to installing an external antenna.

## Description

### BACKGROUND OF THE INVENTION

### 1. Field of the Invention

The present invention is generally related to an expandable routing system, a wireless transceiver, and a cable routing apparatus; more particularly to the expandable routing system and the apparatus that is used to bridge a wireless transceiver for extending network over a mobile communication network.

### 2. Description of Related Art

A network router is such as a network device that is in charge of forwarding the packets according to information of source and destination addresses extracted from the packets. The routing process finds a next routing path determined, by a processor of apparatus, to forward the packets to the destination. The network router forwards the packets according to the packets-carried information such as the source address and destination address. The routing process may need multiple routers to perform sequential routing.

A regular router may forward the packets generated within a network to another network. The common household network sharing machine is used to transform the data created by the home device to the network packets that are applicably forwarded to external network. A common ADSL (asymmetric digital subscriber line) modem, cable modem, or even an optical fiber network device is an intermediate device for processing the routing.

A router has a proprietary function that is to process routing. In case of changing the network type, for example advanced to next generation of communication network, the router lacks of upgrading mechanism to deal with the change. Therefore, the router may be knocked out since it fails to handle the new generation networking.

### SUMMARY OF THE INVENTION

For the regular routing device being adapted to the future network backbone over the mobile communication, an expandable routing system in accordance with the present invention is herein disclosed. The expandable system includes a wireless transceiver and a cable routing apparatus. The system may be able to access another wireless communication network by plugging with an expandable unit. For example, the system may expand its coverage to the fourth-generation mobile communication network (4G) or other wireless network by the invention.

According to one of the embodiments, the expandable routing system essentially includes a wireless transceiver and a cable routing apparatus. The wireless transceiver is equipped with a first antenna contact and a first data connecting port. The cable routing apparatus has a second antenna contact and a second data connecting port. The first antenna contact is electrically with the second antenna contact as well the first data connecting port is linked with the second data connecting port when the wireless transceiver is plugged to or wiredly connected with the cable routing apparatus.

The cable routing apparatus has an antenna unit that is used to process the wireless signals for the wireless transceiver. The apparatus may have internal or external antenna. Since the second antenna contact contacts the first antenna contact, an RF module of the wireless transceiver is connected to the antenna inside the cable routing apparatus. The antenna of the routing apparatus processes wireless signals. The cable routing apparatus may further have one or more network ports bridged to a network.

In one further embodiment, the cable routing apparatus may include one or more LAN ports, such as the wired network ports or the wireless ports. The ports further includes at least one WAN port, by which bridges a digital subscriber line (DSL), cable data line Cable) or an optical network line such as a passive optical network (PON).

In one embodiment, the mentioned first data connecting port of the wireless transceiver and the second data connecting port of the cable routing apparatus may be the corresponding USB ports that are operatively coupled.

In one further embodiment, the disclosed expandable routing system is essentially made of a wireless transceiver and a cable routing apparatus. The wireless transceiver has a mobile network module, a first input/output interface unit and an RF module. The cable routing apparatus has a network routing module, a second input/output interface unit and an antenna unit. Furthermore, one or more connecting ports may be disposed with the cable routing apparatus.

The wireless transceiver may be plugged into the cable routing apparatus via the mentioned connecting ports. The connection made by a direct insertion, or through a cable. In particular, the first input/output interface unit of the wireless transceiver is used to electrically connect with the second input/output interface unit of the cable routing apparatus via a data link. Therefore, the RF module of the wireless transceiver is able to use the antenna unit of the cable routing apparatus to process signals via an antenna link.

The mentioned antenna may be an external device connected with the cable routing apparatus, or an internal component thereof. The antenna is an element used to receive or transmit wireless signals through the wireless transceiver. The mentioned data link is preferably a USB.

### BRIEF DESCRIPTION OF THE DRAWINGS

Fig. 1 shows a schematic diagram of the apparatus of the expandable routing system in accordance with one embodiment of the present invention;
Fig. 2 shows a schematic diagram of the apparatus in the routing system according to one further embodiment of the present invention;
Fig. 3 shows a circuit block diagram depicting the wireless transceiver according to one embodiment of the present invention;
Fig. 4 shows a circuit diagram depicting the cable routing apparatus according to one embodiment of the present invention;
Fig. 5 shows an embodiment describing the expandable routing system compatible to various types of networks;
Fig. 6 shows a flow chart illustrating the steps of determining data routing routes by the expandable routing system.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

Disclosure is related to an expandable routing system. The system combines two independent devices such as a wireless transceiver and a cable routing apparatus. Therefore, the expandable routing system is allowed to extend it network coverage to another wireless communication network, especially the mobile communication network such as fourth generation mobile communication network (4G). The 4G network generally means LTE (Long Term Evolution) or WiMAX. It is noted that the other types of mobile networks may not be excluded in this system.

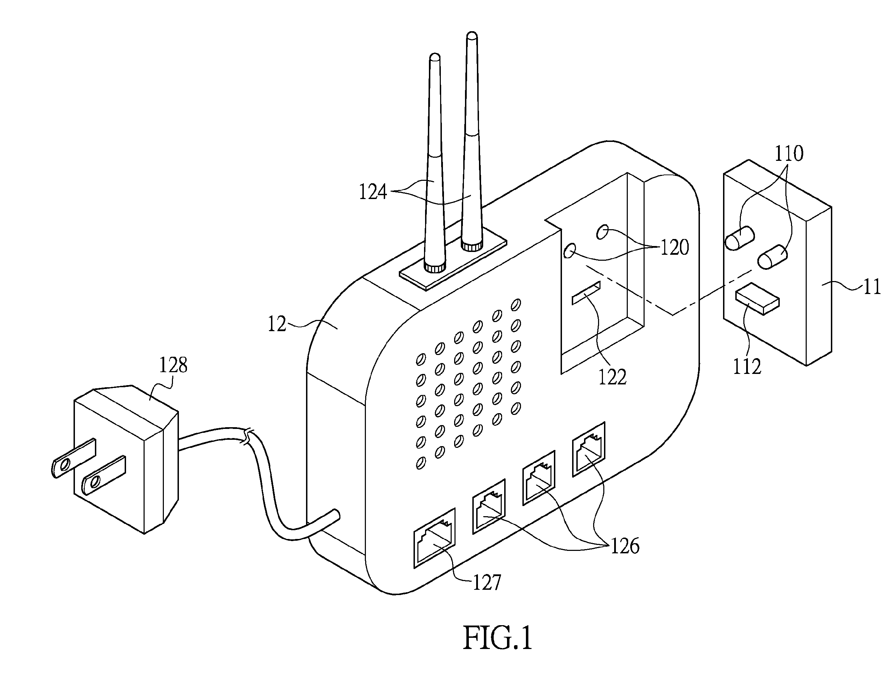

Reference is made to Fig. 1 schematically depicting the expandable routing system in accordance with the embodiment of the present invention. The expandable routing system provides a scheme to extend the original network coverage. When the user has the cable routing apparatus, the cable routing apparatus operates as a router used to bridge the local area network and the wide area network. The apparatus may link the terminal devices via cables, e.g. RJ-45 cables, within the local area network. Further, the apparatus may link the terminal devices in LAN over wireless local area network, for example WiFi™. The cable routing apparatus serves the terminal devices to connect with external network. The asymmetric digital subscriber line (ADSL) modem, cable modem, or optical fiber network, e.g. passive optical network (PON), device may be used to render the network connection for the cable routing apparatus.

Two standalone devices are shown in Fig. 1. One of the devices is a wireless transceiver 11 that is connected with a cable routing apparatus 12 via the corresponding contacts 110, 112, 120, and 122. The cable routing apparatus 12 may be exemplarily disposed with a socket to receive the wireless transceiver 11. However, the practical use may not be limited to any specific structure.

The cable routing apparatus 12 may operates as a general router provided for the devices within the local area network to get on wide area network. The cable routing apparatus 12 may have a second antenna contact 120 that may be implemented to have one or more contacts. For example, the MIMO (multiple inputs and multiple outputs) antenna requires at least two contacts. One of the objectives of the second antenna contact 120 is to electrically connect with the first antenna contact 110 of the wireless transceiver 11. The contacts 110 and 120 may be physically plugged.

In one embodiment of the present invention, the cable routing apparatus 12 may have built-in or externally disposed antenna unit (not shown in this figure) provided for the wireless transceiver 11 to process wireless signals. The antenna unit may not render any function to this cable routing apparatus 12, but served as the antenna for the wireless transceiver 11 while combined with the cable routing apparatus 12.

The cable routing apparatus 12 has a second data connecting port 122 that is correspondingly connected with the first data connecting port 112 of the wireless transceiver 11. For example, USB embodies the transmission interface between the two ends of ports. Other types of connections may not be excluded in the present invention.

The cable routing apparatus 12 is such as standalone router. As shown in the diagram, the cable routing apparatus 12 is electrically powered by an external power supply via a power connecting line 128. The apparatus 12 may have its own power supply. The cable routing apparatus 12 may be disposed with one or more network ports having at least one WAN port 127 being used to link with ADSL modem, Cable modem, optical fiber network modem, or the like. A LAN port 126 may be provided to establish a LAN among the devices. The cable routing apparatus 12 may have a circuit module provided to serve the devices within a wireless LAN. In which, a LAN module (not shown in this diagram) may be used to process RF (radio frequency) signals through antenna 124. WiFi™ technology is the legacy scheme to establish the wireless local area network. The service made by the LAN port 126 over wired network or wireless network may be operated alternatively, or at the same time.

The wireless transceiver 11 in the system may also be a standalone transceiver. A RF module (not shown in this diagram), processing circuit, and power management circuit may be included. The first antenna contact 110 connected with the RF module may be the contact(s) to wire an external antenna. The external antenna may be connected to the transceiver 11 via a cable. Therefore, the wireless transceiver 11 may serve a networking dongle for a computer host to get on mobile communication network while connected with the computer host via the first data connecting port 112. Meanwhile, the first data connecting port 112 is preferably, but not limited to, a USB port for data transmittal.

In particular, the cable routing apparatus 12 may extend its network coverage to another network by an expanding device. For example, the cable routing apparatus 12 may be connected with the wireless transceiver 11 while the first and second antenna contacts 110, 120 are electrically connected with the first and second data connecting ports 112, 122. The wireless transceiver 11 may be wired to the antenna unit of the cable routing apparatus 12 via the first antenna contact 110 and the second antenna contact 120. The antenna unit serves as an antenna for the wireless transceiver 11. The association between the wireless transceiver 11 and the cable routing apparatus 12 may be made by plugging them together via an interface or by using cable to couple the two devices. By plugging or connecting the wireless transceiver, the cable routing apparatus 12 may extend its coverage to the mobile communication network through the wireless transceiver 11.

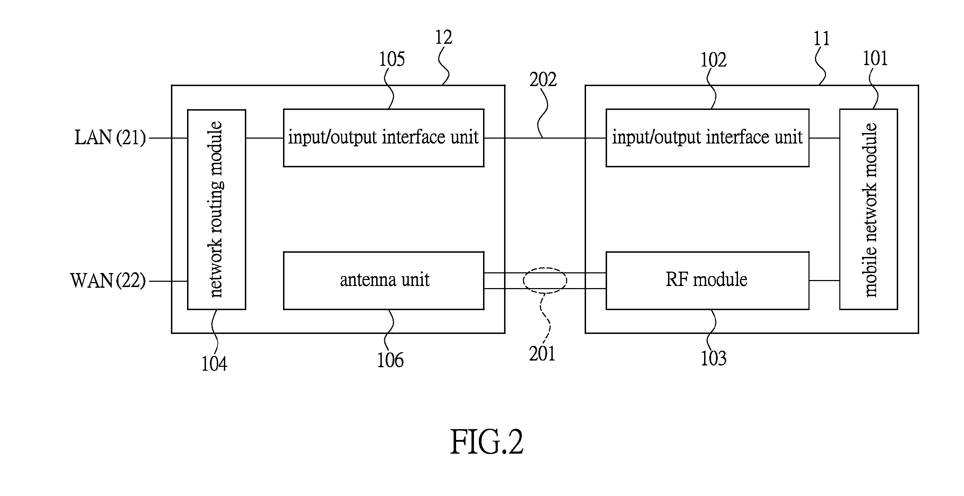

Fig. 2 shows a schematic diagram of the devices in the expandable routing system. The figure depicts the relationship between the wireless transceiver 11 and the cable routing apparatus 12.

The wireless transceiver 11 is disposed with the RF module 103. The RF module 103 is an essential component of the wireless transceiver 11 when it conducts the 4G signals over the mobile communication network. The wireless transceiver is electrically connected with the antenna unit 106 associated with the cable routing apparatus 201 via the antenna link 201. The antenna unit 106 is in charge of processing signals over the mobile communication network for the cable routing apparatus 12. The antenna unit 106 may be a built-in component within the apparatus 12, or an external device. The antenna unit 106 serves the wireless transceiver 11 while it is combined with the cable routing apparatus 12.

The wireless transceiver 11 is such as a transceiver serving the apparatus 12 to bridge the mobile communication network. The wireless transceiver 11 includes a mobile network module 101 for rendering the wireless connection and processing the wireless signals. The first input/output interface unit 102 is such as USB that operates as a data transmission interface for the wireless transceiver 11. The first input/output interface unit 102 couples with the second input/output interface unit 105 of the cable routing apparatus 12 over the data link 202. That means the cable routing apparatus 12 receives or transmits wireless signals through the wireless transceiver 11 via the data link 202.

The cable routing apparatus 12 is as a router that handles the signals over the LAN and WAN. The essential circuit performing packets routing is a network routing module 104. The network routing module 104 constitutes a LAN 22 by its one or more network ports, or wireless interface. The devices within the LAN 22 are allowed to access wide area network 21 over wired interface, associated with one or more network ports, or wireless interface.

The WAN 21 is accessible to the devices within the LAN 22 when the cable routing apparatus 12 establishes the connections by specifying an external modem. For example, the ADSL modem is provided for signaling with a telecommunication company over a telephony line. The cable modem helps establishing a cable data network. An optical fiber network device constitutes an optical fiber network connection.

In addition to cable routing apparatus 12 performing routing process between LAN (22) and WAN (21), the apparatus 12 may extend its network coverage while combined with the wireless transceiver 11. The combination renders an expanding interface made by the second input/output interface unit 105 and the antenna unit 106. Therefore, the cable routing apparatus 12 may extend its networking to the mobile network connection through the wireless transceiver 11. In particular, the wireless transceiver 11 can be directly plugged to the cable routing apparatus 12. Further, the wireless transceiver 11 may also be wired to the cable routing apparatus 12 via a cable.

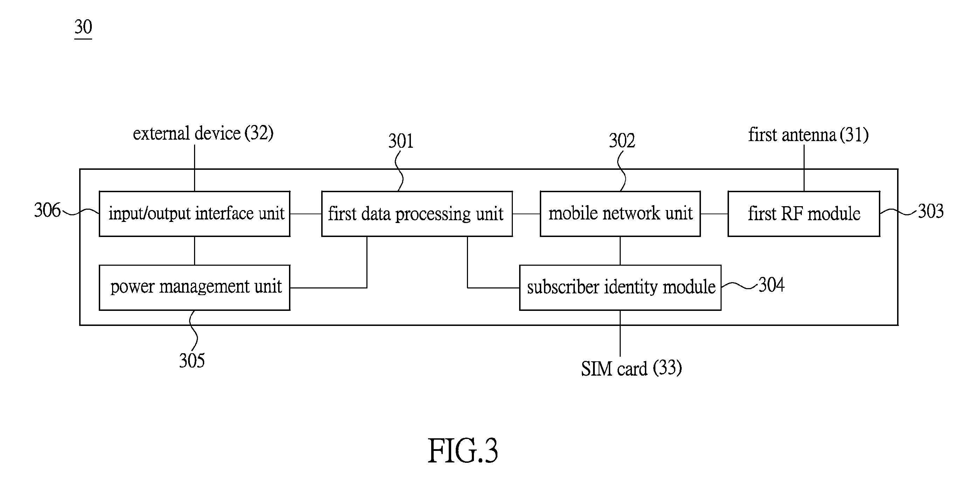

Reference is made to Fig. 3 exemplarily showing the circuit blocks describing the wireless transceiver in the expandable routing system.

A wireless transceiver 30 is shown. The transceiver 30 includes a first data processing unit 301 used to process the inner signals made by the circuits. The wireless transceiver 30 is the device processing signals over mobile communication network. The transceiver 30 includes a mobile network unit 302 used to process signals especially over the fourth generation mobile communication network, e.g. LTE. The mobile network unit 302 may activate the network service by initiating a subscriber identity module (SIM) 304. A SIM card 33 may be required to activate the mobile network service with the telecommunication company. A subscriber identity may be firstly verified by the telecommunication company or Internet service provider (ISP). The wireless transceiver 30 processes the wireless signals over mobile communication network through its first RF module 303, and first antenna 31.

The wireless transceiver 30 is disposed with a first input/output interface unit 306 used to be a data transmission interface. The wireless transceiver 30 may be standalone serving an external device 32 via this first input/output interface unit 306. The external device 32 is such as a computer system which may bridge the mobile communication network through this wireless transceiver 30. The first input/output interface unit 306 is such as a USB which is to be the data transmission interface with the cable routing apparatus.

While the wireless transceiver 30 operates as a standalone device, an external first antenna 31 may be associated with the transceiver 30 for processing the signals over mobile communication network. The wireless transceiver 30 may serve as an expanding component while the wireless transceiver 30 is combined with the cable routing apparatus. The mentioned first antenna 31 is therefore to be a built-in or externally disposed device for the cable routing apparatus.

The wireless transceiver 30 has a power management unit 305 that is used to manage power supplied by the external power supply, or alternatively supplied by a built-in battery set.

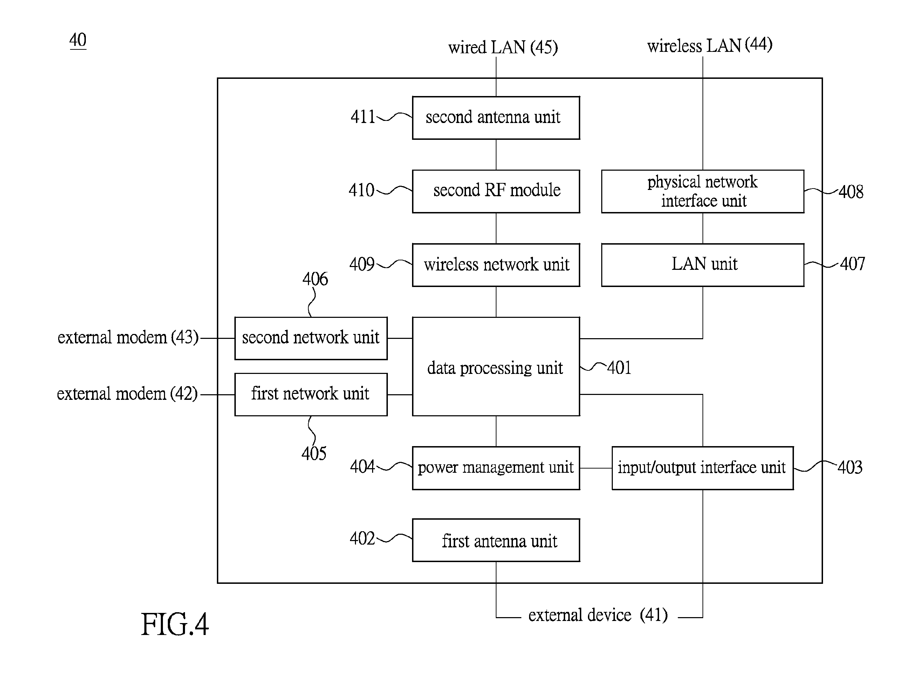

A cable routing apparatus 40 shown in Fig. 4 is the other major device of the system in accordance with the present invention. Fig. 4 shows the circuit blocks describing the main circuits within the cable routing apparatus 40. A second data processing unit 401 is included for processing the signals created in the apparatus 40. The apparatus 40 further includes the circuit units electrically connected with the second data processing unit 401.

The cable routing apparatus 40 is such as a standalone router. The apparatus 40 may include various network interfaces such as a first network unit 405 and a second network unit 406 coupled to the data processing unit 401. The network units 405 and 406 are used to connect with the network equipment providing the network services. The network equipment is such as the shown external modems 42 and 43, for example the ADSL modem used for establishing ADSL networking over the telecommunication company, the cable modem for establishing cable data network, or an optical fiber network device used to establish optical fiber network.

According to one of the embodiments, the cable routing apparatus 40 may be disposed with two set of antennas at the same time. As shown in the figure, a first antenna unit 402 and a second antenna unit 411 are exemplarily provided. The first antenna unit 402 is provided for use of the wireless transceiver. The antenna is useful for the external wireless transceiver but no effect to its associated cable routing apparatus 40. The shown external device 41 is such as the wireless transceiver which is connected with the cable routing apparatus 40 through a second input/output interface unit 403 and the first antenna unit 402.

The cable routing apparatus 40 establishes a wireless local area network by a WiFi™ network module. A wireless network unit 409 is used to process the wireless network signals. The wireless network unit 409 may have both a second RF module 410 and a second antenna unit 411, and by which establish a wireless local area network 45.

Further, the cable routing apparatus 40 may handle the LAN signals by its LAN unit 407, and establish a LAN 44 via a physical network interface unit (PHY) 408.

According to the exemplary embodiment of the present invention, the aforementioned first network unit 405, second network unit 406, wireless network unit 409, and LAN unit 407 may be optional to the user to select one of the services. The installation of the various network units allows the expandable routing system of the present invention to extend its network coverage to the LAN or/and WAN through this cable routing apparatus 40. The cable routing apparatus 40 serves as a routing system for bridging mobile communication network while combined with the wireless transceiver. The standalone cable routing apparatus 40 is disposed with a power management unit 404 which is used to manage the power allocation.

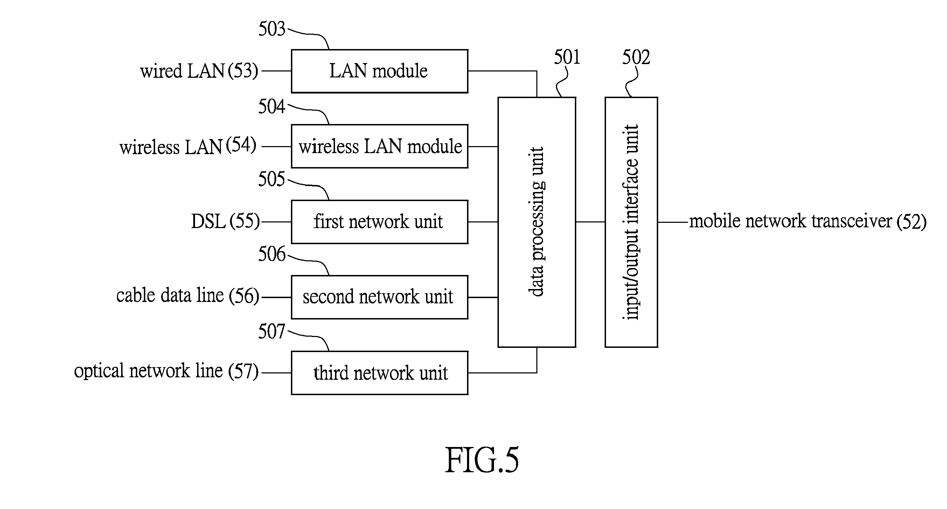

According to the embodiment of the present invention, the expandable routing system may be compatible to the various types of network or operate for heterogeneous networks simultaneously. The related description is referred to the schematic diagram in Fig. 5.

The cable routing apparatus shown in Fig. 5 includes data processing unit 501 for processing internal signals among the circuits, especially the digital packets among the networks. The data processing unit 501 is electrically connected with an input/output interface unit 502 of a mobile network transceiver 52 such as the aforementioned wireless transceiver capable of network expansion. The apparatus is therefore capable of processing the signals over mobile communication network. The data processing unit 501 is also electrically connected with the network modules for processing various network protocols in the cable routing apparatus. The network modules are such as a LAN module 503, a wireless LAN module 504, a first network unit 505, a second network unit 506, and/or a third network unit 507. In practical, the cable routing apparatus may be installed with one or more network modules as described above.

According to one of the embodiments, the cable routing apparatus is equipped with one or more networking measures. For example, the first network unit 505 is used to bridge a digital subscriber line (DSL) 55 such as the general household ADSL. In ADSL network, a DSL modem (not shown in this diagram) is required to establish the digital subscriber line 55.

The cable routing apparatus has a second network unit 506 to establish a cable data line 56 by a cable modem. The cable routing apparatus is therefore allowed to bridge the cable data line 56, which provides an option for the user to select one of the network services.

The cable routing apparatus may be disposed with a third network unit 507 in one further embodiment of the present invention. The network unit 507 renders establishment of an optical network line (PON) 57 which is also an option for the user to select.

The cable routing apparatus is able to provide several options for the user to select one or more network services. For example, the cable routing apparatus allows the user to link a local area network, or automatically switch to one of the supported network services. This cable routing apparatus particularly extends its network coverage through a mobile network transceiver 52 to a mobile communication network. The above mentioned network services are exemplarily described but not limited in the present invention.

The cable routing apparatus has a LAN module 503 to serve the computer devices within a wired local area network 5 to link other networks. The cable routing apparatus is disposed with one or more LAN ports provided for the computer devices to link with this cable routing apparatus via cables, and further get on the mobile communication network through the expanding functions made by mobile network transceiver 52.

The cable routing apparatus also has a wireless LAN module 504 in compliance with a general wireless local area network 54 by a specific communication protocol such as WiFi™. The apparatus therefore provides the computer device within the LAN to link with this apparatus over a wireless connection.

The LAN module 503, wireless LAN module 504, first network unit 505, second network unit 506, third network unit 507, and the mobile network transceiver 52 are separately process (encoding/decoding) the packets made by the various network types. The data processing unit 501 performs routing process according to the source and destination information extracted from the packets.

In particular, the cable routing apparatus is able to extend its network coverage to the mobile communication network through its expanding module. When the cable routing apparatus simultaneously performs routing process over two or more types of networks, the data processing unit 501 and the related firmware may perform a load balance over the various types of networks. That means a time-sharing technology is incorporated to the routing process allowing the packets routed to the different networks by the different network modules. On the other hand, the firmware may perform bandwidth integration over the various networks.

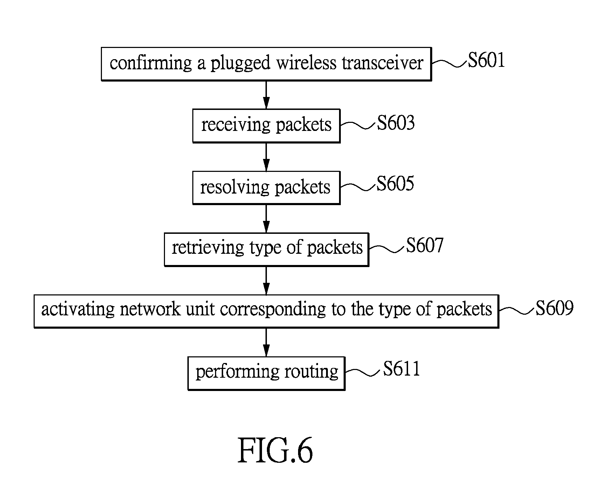

The expandable routing system is formed in combination of the cable routing apparatus and the wireless transceiver. Fig. 6 shows a flow chart illustrating the steps of packet routing.

In addition to the conventional network types supported by the cable routing apparatus, the cable routing apparatus is also expandable through combined with the expanding device, e.g. connected with the wireless transceiver via the contacts or/and interfaces. The network coverage of the cable routing apparatus is therefore extended to the mobile communication network.

In the beginning step S601, the cable routing apparatus confirms that a wireless transceiver is connected. For example, the cable routing apparatus may determine whether or not the wireless transceiver is connected by detecting the electrical features via the contacts.

The apparatus next performs routing, such as step S603. The apparatus then resolves the received network packets by its processing circuit, such as step S605. The type, source and destination of the packets may be recognized according to header information, such as step S607. A network unit corresponding to the detected type of packets is activated (step S609). Therefore, the corresponding network module performs the related decoding/encoding process. In step S611, the apparatus successfully performs routing.

Thus, the aforementioned expandable routing system essentially combines the two standalone devices, including a cable routing apparatus capable of processing routing among the various types of networks, and a wireless transceiver for bridging a mobile communication network. The cable routing apparatus is designed for expandable since it has the expanding mechanics and circuits. The cable routing apparatus particularly disposes an antenna unit and contacts supporting the wireless transceiver. The wireless transceiver has a module for conducting the mobile communication networking and the subscriber identity device. For example, the module is in compliance with the fourth generation mobile communication network such as LTE. The wireless transceiver is also a transceiver provided for the computer host to get one mobile communication network. The combination of the cable routing apparatus and the wireless transceiver allows the expandable routing system to be extended to the mobile communication network in addition to the general network service.

It is intended that the specification and depicted embodiment be considered exemplary only, with a true scope of the invention being determined by the broad meaning of the following claims.

## Claims

1. An expandable routing system, comprising:
a wireless transceiver (11), disposed with a first antenna contact (110), a first data connecting port (112), and an RF module (103) electrically connected with the first antenna contact (110); and
a cable routing apparatus (12), disposed with a second antenna contact (120) and a second data connecting port (122), and further one or more network ports for bridging a network; with an internal or external antenna unit (106) provided for the wireless transceiver (11) to process wireless signaling;
wherein, since the cable routing apparatus (12) and the wireless transceiver (11) are combined, the first antenna contact (110) is electrically connected with the second antenna contact (120), the first data connecting port (112) is electrically connected with the second data connecting port (122); the antenna unit (106) is then electrically connected with the RF module (103) of the wireless transceiver (11) for the wireless transceiver (11) to process wireless signaling.

2. The system according to claim 1, wherein the network port of the cable routing apparatus (12) for bridging the network includes one or more LAN ports (126); wherein the LAN ports (126) are wired or wireless network ports, or simultaneously with both wired and wireless network ports.

3. The system according to claim 2, wherein the cable routing apparatus (12) includes WAN port (127) which is used to bridge a digital subscriber line (55), a cable data line (56) or an optical network line (57).

4. The system according to claim 1, wherein the wireless transceiver (11) is provided for bridging a mobile communication network; the cable routing apparatus (12) has a built-in antenna or externally connects with the antenna unit (106) provided for the wireless transceiver (11) to process signals over the mobile communication network.

5. The system according to claim 1, wherein the first data connecting port (112) of the wireless transceiver (11) is correspondingly connected with the second data connecting port (122) of the cable routing apparatus (12) over USB.

6. The system according to claim 5, wherein, when the wireless transceiver (11) is connected with the cable routing apparatus (12), the first antenna contact (110) and the first data connect port (112) of the wireless transceiver (11) are correspondingly plugged to the second antenna contact (120) and the second data connecting port (122) of the cable routing apparatus (12).

7. The system according to claim 5, wherein, when the wireless transceiver (11) is combined with the cable routing apparatus (12), the first antenna contact (110) and the first data connecting port (112) of the wireless transceiver (11) are correspondingly connected with the second antenna contact (120) and the second data connecting port (122) of the cable routing apparatus (12) over at least two cables.

8. An expandable routing system, comprising:
a wireless transceiver (11), comprising a mobile network module, a first input/output interface unit (102) and an RF module (103); and
a cable routing apparatus (12), comprising a network routing module (104), a second input/output interface unit (105) and a built-in or external antenna unit (106), and further one or more network ports bridged with a network;
wherein, when the wireless transceiver (11) is combined with the cable routing apparatus (12), the first input/output interface unit (102) of the wireless transceiver (11) and the second input/output interface unit (105) of the cable routing apparatus (12) are connected via a data link; the RF module (103) of the wireless transceiver (11) is electrically connected with the antenna unit (106) associated with the cable routing apparatus (12) via an antenna link.

9. The system according to claim 8, wherein the cable routing apparatus (12) includes one or more LAN port (126) bridged with the network; the one or more LAN ports (126) are wired or wireless network ports, or simultaneously both wired and wireless network ports.

10. The system according to claim 9, wherein the cable routing apparatus includes a WAN port (127) bridged with the network; the WAN port (127) is provided for the system to bridge a digital subscriber line (55), a cable data line (56) or an optical network line (57).

11. The system according to claim 8, wherein the wireless transceiver (11) is used to bridge a mobile communication network, the antenna unit (106) built in or externally disposed with the cable routing apparatus (12) is provided for the wireless transceiver (11) to process signals over the mobile communication network.

12. The system according to claim 8, wherein the contacts of the wireless transceiver (11) are plugged with the contacts of the cable routing apparatus (12) via the data link and the antenna link.

13. The system according to claim 8, wherein the contacts of the wireless transceiver (11) are connected with the contacts of the cable routing apparatus (12) through at least two cables.

14. A wireless transceiver of the expandable routing system of claim 1 or 8 is provided for the expandable routing system to bridge a mobile communication network.

15. A cable routing apparatus of the expandable routing system of claim 1 or 8 is provided for the expandable routing system to bridge a local area network or a wide area network.
